# EUROPEAN PATENT APPLICATION

(11) **EP 1 841 188 A2**
(43) Date of publication of application: **03.10.2007**
(21) Application number: 07006717.8
(22) Date of filing: 30.03.2007
(51) Int. Cl.: H04M 1/247

(54) **Terminal equipped with touch-wheel and method for entering command in the terminal**

(30) Priority: 30.03.2006 KR 20060028976
(71) Applicant: LG Electronics Inc., Yongdungpo-Gu Seoul 150-010 (KR)
(72) Inventor: Kim, Tae Hun, Incheon-si (KR); Woo, Boem Young, Bucheon-si Gyeonggi-do (KR); Yoon, Jeong Hyuk LG Electronics Inc. IP Group, Seoul 153-801 (KR); Ahn, Hyun Ju, Songpa-gu Seoul (KR); Han, Seung Sook, Gyeonggi-do (KR); Park, Jun Serk, Seoul (KR); Cheon, Ho Sang, Seoul (KR)
(74) Representative: Katérle, Axel

(57) **Abstract**

A terminal (100) equipped with a touch-wheel (125) and a method for entering a command in the terminal are disclosed. The terminal includes a first touch-wheel (125-1) and a second touch-wheel (125-2) for recognizing a variety of user's touch actions, the first touch-wheel and the second touch-wheel being substantially configured concentrically and a controller for recognizing individual user's touch actions on the first and second touch-wheels as predetermined user commands. A plurality of concentric touch-wheels are mounted on the terminal such that the outer appearance of the mobile terminal is simplified and a user may enter desired commands in the mobile terminal according to a variety of touch-input methods. As a result, the user can enter a variety of commands for performing composite functions of the terminal using the first and second touch-wheels.

## Description

This application claims the benefit of Korean Patent Application No. 10-2006-0028976, filed on March 30, 2006, which is hereby incorporated by reference as if fully set forth herein.

### FIELD OF THE INVENTION

The present invention is directed to a terminal equipped with a touch-wheel and, more specifically, to a method for entering a specific command in a terminal equipped with a touch-wheel.

### DESCRIPTION OF THE RELATED ART

Recently, information and communication environments have changed with increased development of information communication technologies. Specifically, a KIOSK installed in public places as an automated information terminal, such as in government offices, banks, local autonomies, department stores and exhibition rooms, has become a requisite for modern society and is widely used throughout the world. Additionally, mobile communication terminals have also been considered requisites for modern society and are also widely used throughout the world.

Following recent trends toward integration that have influenced the manufacture of many electric appliances or devices, many mobile terminal production companies have recently tried to integrate more and more functions, such as an MP3 player function and camera function, into a single mobile terminal. Therefore, recent mobile terminals tend to have a more complicated input unit, such as a keypad, in order to provide users with easier access to the various integrated functions.

The more complicated the input unit is, the larger area the input unit occupies in a mobile terminal. As a result, it is difficult to reduce the size of the mobile terminal.

### SUMMARY OF THE INVENTION

The present invention is directed to a terminal equipped with a touch-wheel and a method for entering a specific command in the terminal that substantially obviate one or more problems due to limitations and disadvantages of the related art. An object of the present invention is to provide a terminal equipped with a touch-wheel capable of effectively performing a variety of functions of the terminal via a relatively simple input unit located in the terminal and a method for entering a specific command in the terminal.

In one aspect of the present intention, a communication terminal is provided. The communication terminal includes a plurality of touch-sensitive input areas arranged substantially concentrically, each of the plurality of touch-sensitive input areas adapted to receive at least one of rotation contact and cross-movement contact and a controller adapted to detect contact with at least one of the plurality of touch-sensitive input areas and recognize the detected contact as one of a plurality of predetermined information.

It is contemplated that the plurality of touch-sensitive input areas are spaced apart from each other by a predetermined distance such that a non touch-sensitive area is formed between the plurality of touch-sensitive input areas. It is further contemplated that the controller is further adapted to recognize the detected contact according to at least one of an inter-wheel moving-touch action and a wheel-crossing moving-touch action.

It is contemplated that the controller is further adapted to recognize the detected contact according to at least one of a direction of the detected contact and a location of the detected contact. It is further contemplated that the plurality of touch-sensitive input areas include a touch-pad.

It is contemplated that the plurality of touch-sensitive input areas include a touch-screen. It is further contemplated that the communication terminal further includes a key pad having a plurality of keys and the controller is further adapted to detect contact with at least one of the plurality of keys and recognize the detected contact with the at least one of the plurality of keys in conjunction with the detected contact with the touch-screen as the one of a plurality of predetermined information.

It is contemplated that the communication terminal further includes a display unit adapted to display the keypad including the plurality of keys. It is further contemplated that each of the plurality of touch-sensitive input areas adapted to receive cross-movement contact including at least one of longitudinal contact and latitudinal contact.

In another aspect of the present invention, a method for entering information in a communication terminal is provided. The method includes detecting contact with at least one of a plurality of substantially concentric touch-sensitive input areas, each of the plurality of touch-sensitive input areas adapted to receive at least one of rotation contact and cross-movement contact and recognizing the detected contact as one of a plurality of predetermined information.

It is contemplated that the cross-movement contact includes at least one of longitudinal contact and latitudinal contact. It is further contemplated that recognizing the detected contact as one of a plurality of predetermined information includes recognizing at least one of an inter-wheel moving-touch action and a wheel-crossing moving-touch action.

It is contemplated that recognizing the detected contact as one of a plurality of predetermined information includes recognizing at least one of a direction of the detected contact and a location of the detected contact. It is further contemplated that recognizing the detected contact as one of a plurality of predetermined information includes detecting contact with at least one of a plurality of keypad keys, detecting contact with a touch screen and recognizing the detected contact with the at least one of the plurality of keys in conjunction with the detected contact with the touch-screen as the one of a plurality of predetermined information. Preferably, the method further includes displaying a keypad including the plurality of keys.

In another aspect of the present invention, a method for entering information in a communication is provided. The method includes detecting at least one of rotation contact and cross-movement contact with each of a plurality of touch-sensitive input areas and recognizing the detected contact as one of a plurality of predetermined information.

It is contemplated that detecting cross-movement contact includes detecting at least one of longitudinal contact and latitudinal contact. It is further contemplated that recognizing the detected contact as one of a plurality of predetermined information includes recognizing at least one of an inter-wheel moving-touch action and a wheel-crossing moving-touch action.

It is contemplated that recognizing the detected contact as one of a plurality of predetermined information includes recognizing at least one of a direction of the detected contact and a location of the detected contact with at least one of the plurality of touch-sensitive input areas. It is further contemplated that recognizing the detected contact as one of a plurality of predetermined information includes detecting contact with at least one of a plurality of keypad keys, detecting contact with a touch screen and recognizing the detected contact with the at least one of the plurality of keys in conjunction with the detected contact with touch-screen as the one of a plurality of predetermined information. Preferably, the method further includes displaying a keypad including the plurality of keys.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a block diagram of a mobile terminal according to the present invention;

FIGS. 2 to 5 are partially enlarged views illustrating first and second touch-wheels of the mobile terminal illustrated in FIG. 1 in order to explain first to fourth touch-input methods according to the present invention.

FIGS. 6 and 7 illustrate modified examples of a touch-wheel unit of the mobile terminal illustrated in FIG. 1.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

It should be noted that the present invention could be applied to mobile terminals, such as mobile phones, PDAs (Personal Digital Assistants) and game machines as well as to KIOSK terminals, such as ATMs (Automatic Teller Machines). However, for the convenience of description and better understanding of the present invention, it is assumed that the present invention is applied to mobile terminals such as mobile phones. Therefore, it should be noted that the scope of the present invention is not limited to the following explanation and preferred embodiments and can be applied to other examples as necessary.

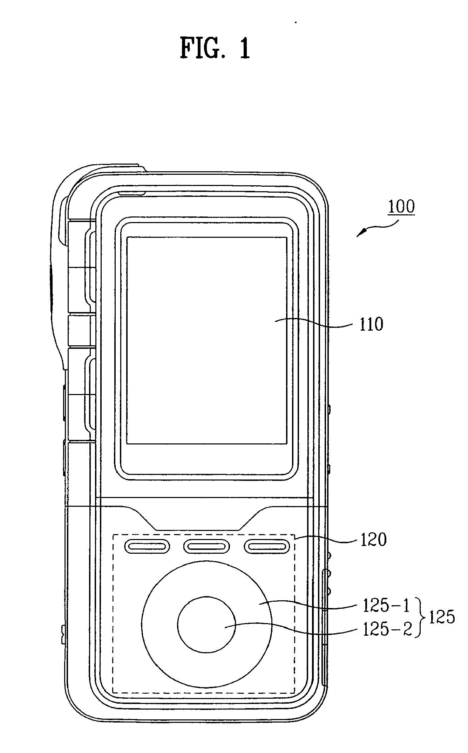

FIG. 1 illustrates a block diagram of a mobile terminal 100 according to the present invention. As illustrated in FIG. 1, the mobile terminal 100 includes a display 110, an input unit 120, a memory unit (not shown) and a controller (not shown).

The mobile terminal 100 may also include other components, such as a Radio Frequency (RF) unit and a camera module unit. However, the other components are not directly associated with the present invention and a detailed description will be omitted for the convenience of description.

The display 110 may display a variety of states of the mobile terminal 100 or information required for executing a variety of functions of the mobile terminal. Preferably, the display 110 is configured in the form of a touch-screen.

The input unit 120 includes a touch-wheel unit 125. The touch-wheel unit 125 includes at least two touch-wheels, such as first touch-wheel 125-1 and second touch-wheel 125-2.

The touch-wheels 125-1 and 125-2 are representative of input units capable of recognizing a user's specific action as a user command. A user's specific action refers to a user contacting one of the touch-wheels 125-1, 125-2 with a pointer, such as a finger or a stylus pen and at the same time rotatably moving the pointer.

The touch-wheels 125-1, 125-2 may be modified for all types of structures capable of receiving a rotation-touch command from a user. Since a circular-shape can more easily receive the user's rotation-touch command, it is assumed that the above-mentioned touch-wheels 125-1, 125-2 are circular-shaped.

Preferably, the first touch-wheel 125-1 and the second touch-wheel 125-2 are substantially configured as concentric circles having different diameters as illustrated in FIG. 1. When the first touch-wheel 125-1 and the second touch-wheel 125-2 are configured as concentric circles having different diameters they occupy a smaller area on the terminal 100 than if they are arranged on the terminal side-by-side. Furthermore, many touch input methods may be created and their detailed description will be described at a later time.

The mobile terminal 100 may include other input units, such as a keypad, a scroll-wheel and a voice recognition device, in addition to the wheels 125-1, 125-2. However, a detailed description will be omitted for convenience of description.

The memory unit (not shown) includes programs for operating the mobile terminal and a variety of information or data stored by a user command. Specifically, the memory unit may store information associated with a variety of touch-input methods and commands corresponding to the touch-input methods.

The controller (not shown) controls all operations of the mobile terminal 100 including the display 110, the input unit 120 and the memory unit (not shown). Specifically, the controller enables the input unit 120 to recognize a variety of input methods for use in the first 125-1 and second 125-2 touch-wheels as different commands.

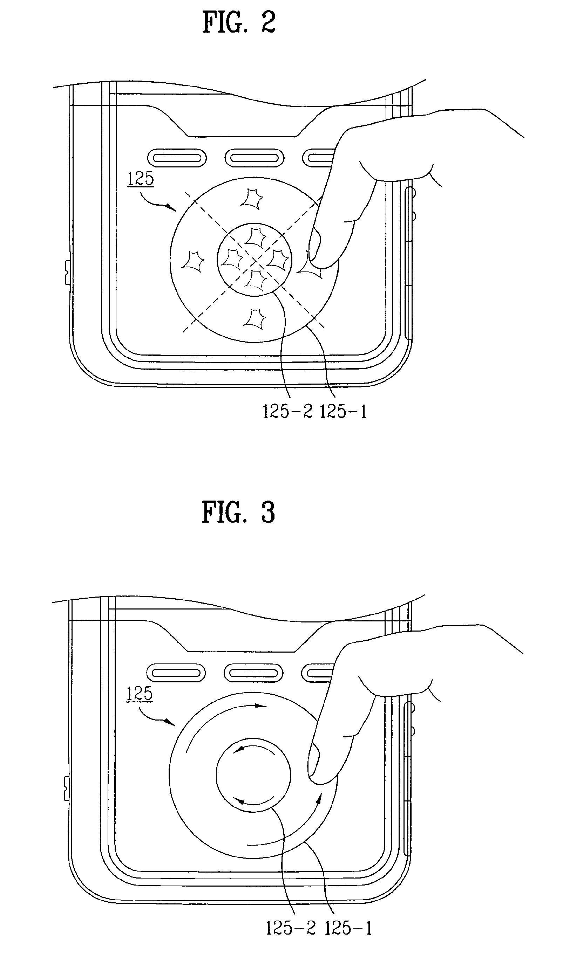

If required, the controller may recognize a variety of input methods for use in the first 125-1 and second 125-2 touch-wheels as different commands according to information associated with the variety of touch-input methods stored in the memory unit. A detailed description will be provided with reference to FIGS. 2 to 5, which are partially enlarged views illustrating the first 125-1 and second 125-2 touch-wheels of the mobile terminal 100 in order to explain a plurality of touch-input methods using the first and second touch-wheels according to the present invention.

First Touch-Input Method

As illustrated in FIG. 2, the first 125-1 and second 125-2 touch-wheels may be divided into a plurality of portions. Different commands may be recognized according to the plurality of portions. Different commands may be recognized according to the plurality of portions if a user of the mobile terminal 100 touches one of the plurality of portions with his or her finger and immediately takes the finger off of the portion. The above-mentioned user's action of touching one of the plurality of portions and then removing the finger from the portion is called a "simple-touch action."

As illustrated in FIG. 2, each of the first 125-1 and second 125-2 touch-wheels is divided into four equal portions such that 8 different commands are recognized when the user executes the simple-touch action on the 8 different portions. However, it should be noted that the present invention is not limited to the above-mentioned example and the first 125-1 and second 125-2 touch-wheels may also be divided into more portions than the 8 portions illustrated, thereby receiving more commands from the user.

Second Touch-Input Method

As illustrated in FIG. 3, a user of the mobile terminal 100 touches a specific point on the first touch-wheel 125-1 with his or her finger and moves the finger in a clockwise or counterclockwise direction while maintaining contact with the specific point in order to enter a desired command. The above-mentioned user's action of touching a specific point on a touch-wheel and moving the finger in a clockwise or counterclockwise direction is called a "rotation-touch action." Similarly, the user executes the rotation-touch action in a clockwise or counterclockwise direction on the second touch-wheel 125-2 in order to enter a desired command .

For example, the user of the mobile terminal 100 may execute the rotation-touch action on the first touch-wheel 125-1 such that MP3 data is reproduced according to a FF (Fast Forward) function (generally indicated with "► ►") or REW (Rewind) function (generally indicated with "◄ ◄") if the mobile terminal includes an MP3 playback function. The user may execute an additional rotation-touch action on the second touch-wheel 125-2 in order to adjust the volume of MP3 data.

Similar to the configuration in FIG. 2, the first 125-1 and second 125-2 touch-wheels of FIG. 3 may also be divided into a plurality of portions. In this way, various functions may be executed according to the individual portions if the user executes the rotation-touch action on individual portions.

Third Touch-Input Method

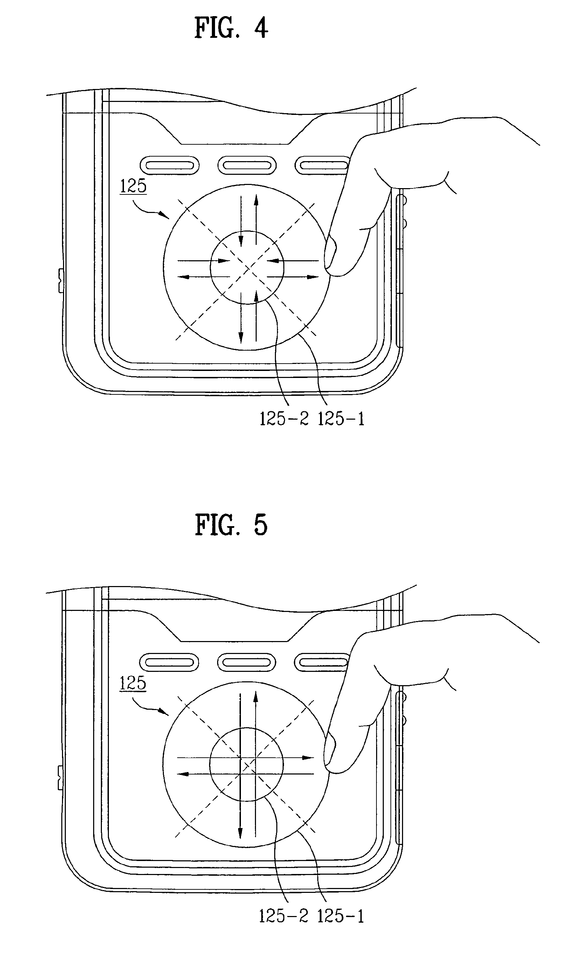

As illustrated in FIG. 4, if a user of the mobile terminal 100 moves his or her finger from the first touch-wheel 125-1 to the second touch-wheel 125-2 or from the second touch-wheel 125-2 to the first touch-wheel 125-1, the user's action may be recognized as a specific command. The above-mentioned user's action of moving a finger from one touch-wheel to another is called an "inter-wheel moving-touch action."

A first command generated when the user moves his or her finger from the first touch-wheel 125-1 to the second touch-wheel 125-2 is recognized as different from a second command generated when the user moves his or her finger from the second touch-wheel to the first touch-wheel, such that a new touch-input method different from the previously described first and second touch-input methods is implemented. Therefore, the mobile terminal 100 can receive many more commands than can be received using the first and second touch-input methods if the third touch-input method is utilized.

Similar to the configuration in FIG. 2, the first 125-1 and second 125-2 touch-wheels of FIG. 4 may also be divided into a plurality of portions. In this way, different functions may be executed according to the individual portions if the user executes the inter-wheel moving-touch action on individual portions.

Fourth Touch-Input Method

As illustrated in FIG. 5, if a user of the mobile terminal 100 touches one end of the first touch-wheel 125-1 with his or her finger, moves the finger from the first touch-wheel to the second touch-wheel and continues to move the finger from the second touch-wheel to the other end of the first touch-wheel, the user's action may be recognized as a specific command. The above-mentioned user's action of moving a finger from one end of a first touch-wheel over a second touch -wheel and on to the other end of the first touch wheel is called a "wheel-crossing moving-touch action."

The fourth touch-input is different from the previously discussed first to third touch-input methods. The mobile terminal 100 can receive many more commands than can be received using the first to third touch-input methods if the user utilizes the fourth touch-input method.

Similar to the configuration in FIG. 2, the first 125-1 and second 125-2 touch-wheels of FIG. 5 may also be divided into a plurality of portions. In this way, different functions may be executed according to the individual portions if the user executes the wheel-crossing moving-touch action on individual portions.

A variety of touch-input methods available for the touch-wheel unit 125 of the present invention have been disclosed.

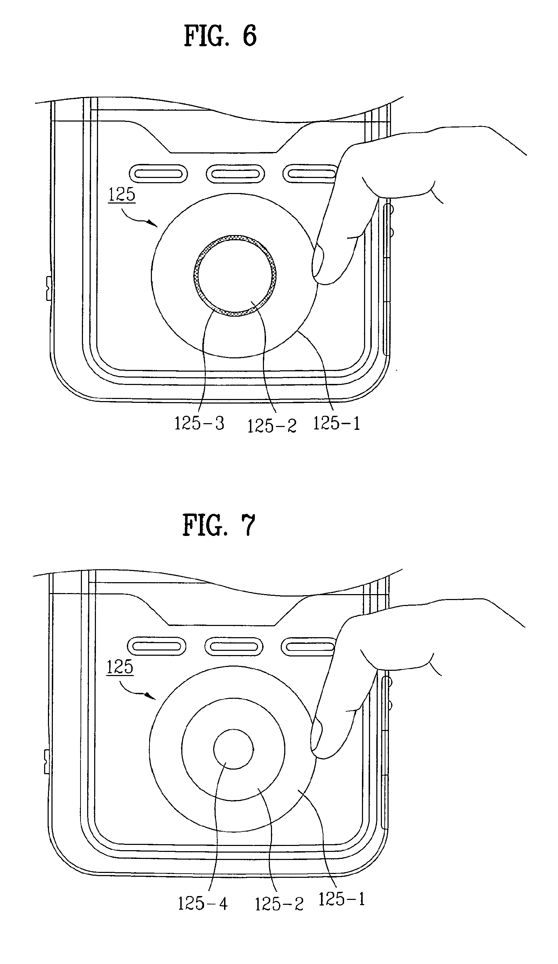

As illustrated in FIG. 6, the first touch-wheel 125-1 and the second touch-wheel 125-2 may also be spaced apart from each other by a predetermined gap 125-3. The gap 125-3 between the first 125-1 and second 125-2 touch-wheels allows the mobile terminal's user to more clearly discriminate between the first and second touch-wheels when the user enters a predetermined touch command using the touch-wheel unit 125 equipped with the first and second touch-wheels.

As illustrated in FIG. 7, the touch-wheel unit 125 may include at least a third touch-wheel 125-4 having the same concentricity as that of the first 125-1 and second 125-2 touch-wheels. In this way, the first 125-1, second 125-2 and third 125-4 touch-wheels may be concentrically arranged.

It is obvious to those skilled in the art that the touch-input methods described herein are applicable to the third touch-wheel 125-4 without departing from the spirit or scope of the inventions. Therefore, detailed description will be omitted for the convenience of description.

A terminal equipped with a touch-wheel and a method for entering a command in the terminal using the touch-wheel according to the present invention has several effects. The present invention mounts a plurality of concentric touch-wheels on the terminal such that the outer appearance of the mobile terminal is simplified and a user may enter desired commands according to a variety of touch- input methods. As a result, the user can freely enter a variety of commands for performing composite functions of the mobile terminal using the touch-wheel unit of the present invention.

Although the present invention has been disclosed with respect to the first to fourth-touch input methods, it should be noted that the scope of the present invention is not limited to the above-mentioned examples and can also be applied to other examples as necessary. For example, the touch-wheel unit of the present invention may also be implemented as an OSD (On Screen Display) on the touch-screen as necessary if the display of the mobile terminal is implemented with a touch-screen.

It will be apparent to those skilled in the art that various modifications and variations can be made in the present invention without departing from the spirit or scope of the inventions. Therefore, it is intended that the present invention covers the modifications and variations of this invention provided they come within the scope of the appended claims and their equivalents.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A communication terminal, comprising:
a plurality of touch-sensitive input areas arranged substantially concentrically, each of the plurality of touch-sensitive input areas adapted to receive at least one of rotation contact and cross-movement contact; and
a controller adapted to detect contact with at least one of the plurality of touch-sensitive input areas and recognize the detected contact as one of a plurality of predetermined information.

2. The communication terminal of claim 1, wherein the plurality of touch-sensitive input areas are spaced apart from each other by a predetermined distance such that a non touch-sensitive area is formed between the plurality of touch-sensitive input areas.

3. The communication terminal of claim 1, wherein the controller is further adapted to recognize the detected contact according to at least one of an inter-wheel moving-touch action and a wheel-crossing moving-touch action.

4. The communication terminal of claim 3, wherein the controller is further adapted to recognize the detected contact according to at least one of a direction of the detected contact and a location of the detected contact.

5. The communication terminal of claim 1, wherein the plurality of touch-sensitive input areas comprise a touch-pad.

6. The communication terminal of claim 1, wherein the plurality of touch-sensitive input areas comprise a touch-screen.

7. The communication terminal of claim 6, further comprising a key pad having a plurality of keys and wherein the controller is further adapted to:
detect contact with at least one of the plurality of keys; and
recognize the detected contact with the at least one of the plurality of keys in conjunction with the detected contact with the touch-screen as the one of a plurality of predetermined information.

8. The communication terminal of claim 7, further comprising a display unit adapted to display the keypad comprising the plurality of keys.

9. The communication terminal of claim 1, wherein each of the plurality of touch-sensitive input areas adapted to receive cross-movement contact comprising at least one of longitudinal contact and latitudinal contact.

10. A method for entering information in a communication terminal, the method comprising:
detecting contact with at least one of a plurality of substantially concentric touch-sensitive input areas, each of the plurality of touch-sensitive input areas adapted to receive at least one of rotation contact and cross-movement contact; and
recognizing the detected contact as one of a plurality of predetermined information.

11. The method of claim 10, wherein the cross-movement contact comprises at least one of longitudinal contact and latitudinal contact.

12. The method of claim 10, wherein recognizing the detected contact as one of a plurality of predetermined information comprises recognizing at least one of an inter-wheel moving-touch action and a wheel-crossing moving-touch action.

13. The method of claim 10, wherein recognizing the detected contact as one of a plurality of predetermined information comprises recognizing at least one of a direction of the detected contact and a location of the detected contact.

14. The method of claim 10, wherein recognizing the detected contact as one of a plurality of predetermined information comprises:
detecting contact with at least one of a plurality of keypad keys;
detecting contact with a touch screen; and
recognizing the detected contact with the at least one of the plurality of keys in conjunction with the detected contact with the touch-screen as the one of a plurality of predetermined information.

15. The method of claim 14, further comprising:
displaying a keypad comprising the plurality of keys.

16. A method for entering information in a communication, the method comprising:
detecting at least one of rotation contact and cross-movement contact with each of a plurality of touch-sensitive input areas; and
recognizing the detected contact as one of a plurality of predetermined information.

17. The method of claim 16, wherein detecting cross-movement contact comprises detecting at least one of longitudinal contact and latitudinal contact.

18. The method of claim 16, wherein recognizing the detected contact as one of a plurality of predetermined information comprises recognizing at least one of an inter-wheel moving-touch action and a wheel-crossing moving-touch action.

19. The method of claim 16, wherein recognizing the detected contact as one of a plurality of predetermined information comprises recognizing at least one of a direction of the detected contact and a location of the detected contact with at least one of the plurality of touch-sensitive input areas.

20. The method of claim 16, wherein recognizing the detected contact as one of a plurality of predetermined information comprises:
detecting contact with at least one of a plurality of keypad keys;
detecting contact with a touch screen; and
recognizing the detected contact with the at least one of the plurality of keys in conjunction with the detected contact with touch-screen as the one of a plurality of predetermined information.

21. The method of claim 20, further comprising:
displaying a keypad comprising the plurality of keys.
